# EUROPÄISCHE PATENTSCHRIFT

(11) **EP 1 572 403 B1**
(45) Veröffentlichungstag und Bekanntmachung des Hinweises auf die Patenterteilung: **15.08.2012**
(21) Anmeldenummer: 03782466.1
(22) Anmeldetag: 19.12.2003
(51) Int. Cl.: B23B 31/16, B23B 31/167

(54) **KRAFTSPANNFUTTER UND KEILSTANGE DAFÜR**
CLAMPING CHUCK AND KEY ROD THEREFOR
MANDRIN DE SERRAGE ET TIGE DE SERRAGE DESTINEE A CELUI-CI

(30) Priorität: 20.12.2002 DE 10259959
(43) Veröffentlichungstag der Anmeldung: 14.09.2005
(73) Patentinhaber: Schunk GmbH & Co. KG Spann- und Greiftechnik, 74348 Lauffen (DE)
(72) Erfinder: ÜBELE, Andrè, 71546 Kleinaspach (DE); GULDE, Siegfried, 88515 Dürrenwaldstetten (DE)
(74) Vertreter: Paul, Dieter-Alfred
(86) Internationale Anmeldenummer: PCT/EP2003/014651
(87) Internationale Veröffentlichungsnummer: WO 2004/056516

(56) Entgegenhaltungen:
- DE-A- 2 949 566
- DE-A- 4 335 896
- DE-C- 4 016 775
- DE-C- 19 502 363
- DE-U- 29 615 682
- US-B1- 6 397 712

## Beschreibung

Die vorliegende Erfindung betrifft Kraftspannfutter für Werkzeugmaschinen, insbesondere für Drehmaschinen, nach dem Oberbegriff von Anspruch 1. . Des weiteren betrifft die Erfindung eine Keilstange für ein solches Spannfutter.

Spannfutter für Werkzeugmaschinen dieser Art sind bekannt und werden in der Praxis in erster Linie an Drehmaschinen eingesetzt, um die zu bearbeitenden Werkstücke zu spannen. Die herkömmlichen Spannfutter bestehen aus einem formsteifen Futterkörper, der eine zentrale Aufnahmeöffnung für die Werkstücke aufweist, sowie aus mehreren Spannbacken, die in Backenführungen des Futterkörpers radial bewegbar sind. Neben manuell betätigbaren Handspannfuttern werden in komplexeren Werkzeugmaschinen, insbesondere in programmgesteuerten Drehautomaten, häufig sogenannte Kraftspannfutter eingesetzt, bei denen die von den Spannbacken auf das Werkstück ausgeübten Spannkräfte motorisch oder hydraulisch erzeugt werden.

Aus der DE-A-43 35 896 ist beispielsweise ein Kraftspannfutter bekannt, das nach dem Prinzip sich gradlinig bewegender Keilstangen arbeitet, die in quer zu den Führungsnuten für die Spannbacken vorgesehenen Keilstangentaschen bewegbar geführt sind. Die Keilstangen, welche durch einen im Futterkörper angeordneten Zylinder angetrieben werden, sind mit den Spannbacken über Schrägverzahnungen derart gekoppelt, daß die tangentialen Bewegungen der Keilstangen in den Keilstangentaschen in radiale Spannbewegungen der Spannbacken umgesetzt werden.

Bei dem bekannten Spannfutter kann jede Keilstange durch ein exzentrisches Stellorgan (Exenterbolzen), welches in die Keilstange eingreift und mittels eines Ausklinkschlüssels von außen verdrehbar ist, axial verstellt werden, so daß ihre Verzahnung außer Eingriff von der Gegenverzahnung der zugehörigen Spannbacke kommt und die Spannbacke radial aus der Führungsnut im Futterkörper herausgezogen werden kann.

Bei einem anderen Kraftspannfutter, welches aus der DE 40 16 775 C1 bekannt ist, sind die Keilstangen axial verschiebbar in einer radial zur Futterachse verschiebbaren Treibbacke gehalten. Bei diesem Spannfutter ist die Treibbacke über eine Keilhakenkopplung mittels eines axial beweglichen Futterkolbens radial verstellbar, um die Treibbacke gemeinsam mit der Keilstange zu bewegen, und kann die Keilstange parallel zur Futterachse gegenüber der Treibbacke bewegt werden, um sie außer Eingriff von der Spannbacke zu bringen, so daß die Spannbacke aus der Führungsnut im Futterkörper herausgezogen werden kann.

Bei den bekannten Kraftspannfuttern erfolgt die Betätigung der Exzenterbolzen über einen Ausklinkschlüssel, der vor der Inbetriebnahme des Kraftspannfutters wieder von dem Futterkörper abgezogen werden muß. Aus Gründen der Betriebssicherheit weisen die bekannten Kraftspannfutter eine Arretierungseinrichtung auf, welche ein solches Abziehen nur dann zuläßt, wenn sich der Exzenterbolzen in seiner Betriebsstellung befindet, welche der Arbeitsstellung der Keilstange entspricht, ansonsten jedoch ein Abziehen des Ausklinkschlüssels verhindert. Auf diese Weise soll durch den am Futterkörper steckenden Ausklinkschlüssel dem Benutzer ein visueller Hinweis gegeben werden, dass sich das Kraftspannfutter noch nicht im Betriebszustand befindet.

Aus der DE 296 15 682 U1 ist ein weiteres gattungsgemäßes Kraftspannfutter zu Werkzeugmaschinen bekannt. Dieses weist Arretierungsmittel auf, die verhindern sollen, dass die Keilstange in ihre obere Arbeitsstellung gelangen kann, wenn sich die Verzahnungen der Keilstange mit der Gegenverzahnung einer zugehörigen Spannbacke nicht in Eingriff befindet. Konkret weist das bekannte Spannfutter ein schieberförmiges Verriegelungsglied auf, das mit einem Endteil in die Bewegungsbahn der Spannbacke vorsteht. Der Schieber befindet sich durch die Wirkung einer Druckfeder in seiner ausgerückten Position, in welcher die Keilstange mit ihrer linken Unterkante in eine entsprechend geformte Kerbe des Verriegelungsgliedes eingreift und dadurch an einer Querverschiebung gehindert wird. Auf diese Weise wird ein Eingriff der Verzahnung der Keilstange in die Verzahnung der Spannbacke nur soweit möglich, dass nur eine Backensicherung gegeben ist. Erst wenn die Spannbacke ausreichend weit nach radial innen zugestellt wird und ihre Seitenkante des Verriegelungsgliedes durch Einwirkung auf die schräge Auflauffläche entgegen der Kraft der Feder verschiebt, wird die Keilstange freigegeben und kann durch Verstellen des Exzenters in die Eingriffsposition bewegt werden. Die DE 296 15682 U1 offenbart somit ein Spannfutter mit einer Kombination der Merkmale des Oberbegriffs des Anspruch 1 sowie eine Keilstange mit einer Kombination der Merkmale des Oberbegriffs des Anspruchs 5.

Aufgabe der Erfindung ist es, ein Kraftspannfutter der eingangs genannten Art sowie eine Keilstange in einer solchen Weise auszubilden, daß die Betriebssicherheit sich deutlich erhöhen läßt.

Diese Aufgabe ist durch ein Spannfutter mit den Merkmalen des Anspruchs 1 sowie durch eine Keilstange mit den Merkmalen des Anspruchs 5 gelöst.

Der Erfindung liegt damit die Überlegung zugrunde, Kraftspannfutter in der Weise auszugestalten, daß der Exzenterbolzen nur dann in seine Ausgangsstellung zurückgeführt werden kann, in welcher der Ausklinkschlüssel abgezogen werden kann, wenn gewährleistet ist, daß in die entsprechende Backenführung des Futterkörpers eine Spannbacke eingesetzt ist und insbesondere eine aus sicherheitstechnischen Gründen ausreichende Überdeckung der Verzahnungen von Spannbacke und Keilstange vorliegt.

Hierzen wird der Kupplungsaufsatz in der Backenwechselstellung und der Exzenterbolzen in.seiner der Backenwechselstellung entsprechenden Drehlage arretiert, wenn das Druckelement, welches in dem Exzenterbolzen gehalten ist, in die Durchgangsbohrung, in welcher der Raststift sitzt, eingreift. Ein solcher Eingriff des Druckelements ist nur möglich, wenn das obere Ende der Durchgangsbohrung, welches im Bereich der Verzahnung der Keilstange positioniert ist, frei ist und der Raststift aus der Keilstangen austreten kann, d.h. wenn ein Heraustreten nicht durch eine in die entsprechende Backenführung eingesetzte Spannbacke verhindert wird. Wenn andererseits ein solches Austreten des Raststiftes aus der Keilstange durch eine Spannbacke verhindert wird und damit sichergestellt ist, daß einerseits überhaupt eine Spannbacke in das Spannfutter eingesetzt ist und andererseits die Spannbacke auch ausreichend weit in die Backenführung eingesetzt ist und somit die sicherheitsrelevante Überdeckung der Verzahnungen von Keilstange und Spannbakke vorliegt, wird durch den Raststift verhindert, daß das Druckelement des Exzenterbolzens in die Durchgangsbohrung eintritt und damit sichergestellt, daß der Exzenterbolzen in die Ausgangslage zurückgedreht werden kann.

In weiterer Ausgestaltung dieser Ausführungsform ist zweckmäßigerweise vorgesehen, daß das Druckelement im Bereich seiner mit dem Raststift in Kontakt kommenden Stirnfläche abgeschrägt oder abgerundet ausgebildet ist. Hierdurch wird sichergestellt, daß auch in denjenigen Fällen, in denen das Druckelement beispielsweise aufgrund von Fertigungstoleranzen in ungewollter weise leicht in die Durchgangsbohrung eingreift, die abgeschrägte oder abgerundete Stirnfläche als Auslaufschräge wirkt, die mit einer Kante der Durchgangsbohrung zusammenwirkt, um das Druckelement in den Exzenterbolzen zurückzuschieben, wenn der Exzenterbolzen in seine Ausgangslage zurückgedreht wird.

In weiterer Ausbildung der Erfindung kann der Keilstangenfortsatz an seiner Unterseite einen Führungsfortsatz besitzen, der in eine entsprechende Führungsbohrung des Keilstangenkörpers eingreift. Dabei wird der Kupplungsaufsatz an dem Keilstangenkörper vorzugsweise durch Druckfedern abgestützt und gegen die Spannbacke gedrückt. In diesem Fall ist gemäß einer bevorzugten Ausführungsform vorgesehen, daß die Gegenfläche der Keilstange, mit welcher der Fortsatz des Exzenterbolzens in Eingriff kommt, an dem Führungsfortsatz ausgebildet ist.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Ausführungsform eines erfindungsgemäßen Spannfutters in perspektivischer Darstellung,
- Figur 2: das Spannfutter aus Figur 1 in Draufsicht,
- Figur 3: das Spannfutter im Schnitt entlang der Linie F-F in Figur 2,
- Figur 4: das Spannfutter aus Figur 2 in der Seitenansicht mit Teilschnitt entlang der Linie A-A in Figur 2,
- Figur 5: eine erfindungsgemäße Keilstange in perspektivischer Ansicht,
- Figur 6: die Keilstange im Schnitt entlang der Linie VII-VII in Figur 5 in der Arbeitsstellung,
- Figur 7: die Keilstange aus Figur 6, nachdem der Exzenterbolzen um 82° im Uhrzeigersinn gedreht wurde,
- Figur 8: die Keilstange aus Figur 7, nachdem der Exzenterbolzen um 90° im Uhrzeigersinn gedreht wurde,
- Figur 9: die Keilstange aus Figur 7, nachdem der Exzenterbolzen um den maximalen Weg von 97° gedreht wurde, und
- Figur 10: die Keilstange aus Figur 7, nachdem der Exzenterbolzen um 90° im Uhrzeigersinn gedreht wurde, jedoch ohne Spannbacke.

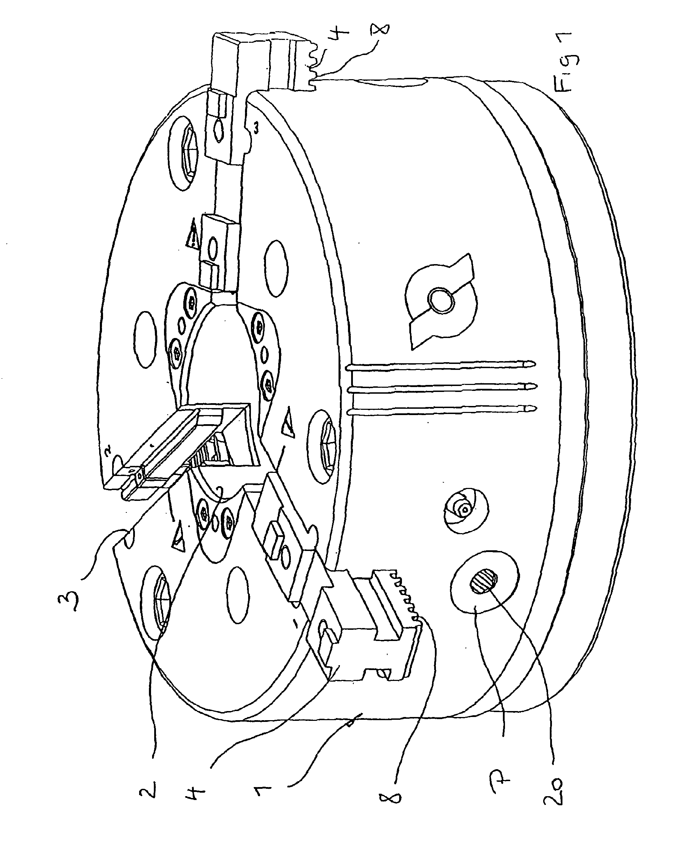

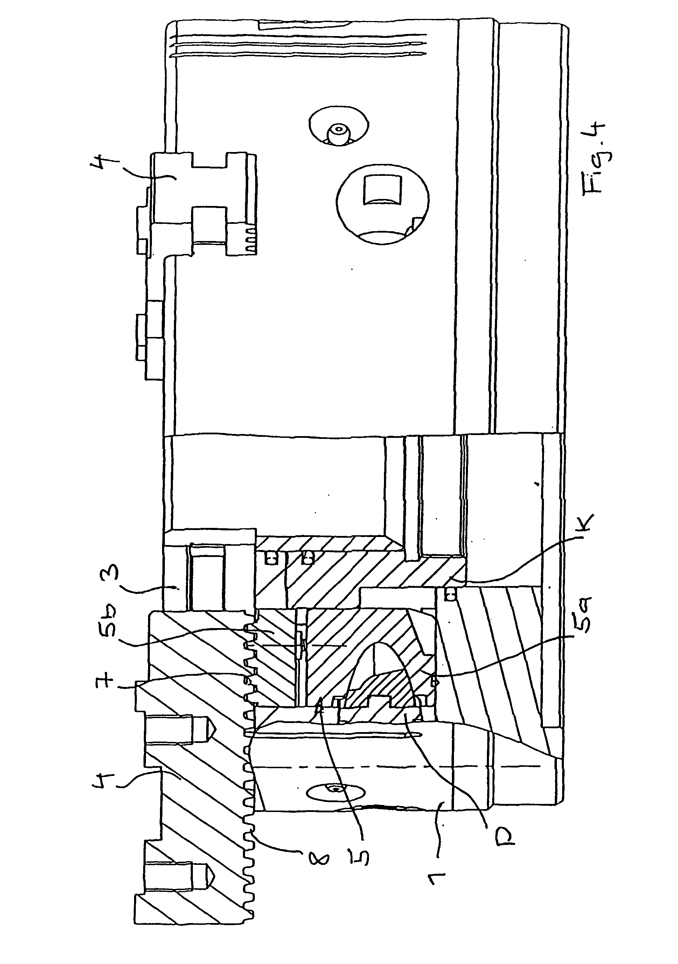

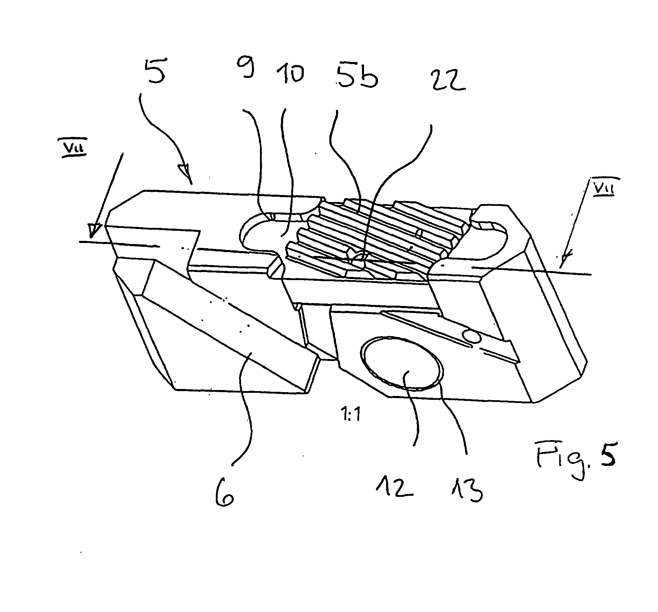

In den Figuren 1 bis 5 ist eine Ausführungsform eines Spannfutters gemäß der vorliegenden Erfindung dargestellt, das beispielsweise zum Spannen von Werkstücken an Drehmaschinen eingesetzt werden kann. Zu dem Spannfutter gehört ein Futterkörper 1 zylindrischer Grundform, der an seiner rückseitigen Stirnfläche an der nicht dargestellten Spindel einer Werkzeugmaschine befestigt werden kann. Der Futterkörper weist einen zentralen Durchlaß 2 auf, in den ein zu spannendes Werkstück eingesetzt werden kann.

Das dargestellte Spannfutter ist in herkömmlicher Weise als Dreibackenfutter ausgebildet. Entsprechend sind an der vorderen Stirnseite des Futterkörpers 1 drei radiale Backenführungen 3 vorgesehen, die gleichmäßig über den Umfang verteilt, d.h. mit jeweils 120° versetzt gegeneinander angeordnet sind. In die Backenführungen 3 sind Spannbacken 4 eingesetzt, die jeweils aus einer Grundbakke und einer daran anschraubbaren Aufsatzbacke bestehen können. In der Zeichnung ist jeweils nur die Grundbacke der Spannbacken 4 dargestellt. Die drei Spannbacken 4 können durch einen Keilstangenmechanismus zum Spannen und Lösen von Werkstücken gemeinsam nach innen und außen verstellt werden.

Zu diesem Keilstangenmechanismus gehören drei Keilstangen 5, die jeweils einer der Spannbacken 4 zugeordnet und im Futterkörper 1 quer zu den Backenführungen 3 verstellbar gehalten sind. Konkret weisen die Keilstangen 5 jeweils einen länglichen Keilstangenkörper 5a auf, der in dem Futterkörper 1 verstellbar angeordnet ist und an seinem einem, radial weiter innenliegenden Ende mit schräg zur Futterachse A verlaufenden Keilflächen 6 versehen ist, die mit entsprechenden Keilflächen eines nur angedeuteten Futterkolbens K zusammenwirken, um eine Axialbewegung des Futterkolbens K im Futterkörper 1 in eine radiale Bewegung der Keilstangenkörper 5a umzusetzen. Die Keilstangen 5 haben weiterhin jeweils einen Kupplungsaufsatz 5b, der an seiner Vorderseite eine Verzahnung 7 trägt, die in eine entsprechende Gegenverzahnung 8 an der zugehörigen Spannbacke 4 eingreift. In den Figuren sind die Keilstange 5 und die Spannbacke 4 in ihrer Kupplungsstellung dargestellt. Die Entkupplungsstellung ist nicht gezeigt.

Bei der dargestellten Ausführungsform sind die Kupplungsaufsätze 5b im wesentlichen plattenförmig ausgebildet und in eine entsprechende Ausnehmung 9 an der Oberseite des jeweiligen Keilstangenkörpers 5 eingesetzt. Der Kupplungsaufsatz 5b greift dabei mit zwei ohrförmigen Fortsätzen 10 an seinen axialen Enden in komplementär ausgebildete Bereiche der Ausnehmung 9 unter Bildung eines Formschlusses ein, so daß der Kupplungsaufsatz 5b gegenüber dem Keilstangenkörper 5a quer zur Futterachsrichtung A jedenfalls im wesentlichen unbeweglich ist und quer zur Futterachsrichtung wirkende Kräfte über die ohrförmigen Fortsätze 10 in den Keilstangenkörper 5a eingeleitet werden. Durch diese Abstützung des Kupplungsaufsatzes 5b am Keilstangenkörper 5a wird ein Kippen des Kupplungsaufsatzes 5b verhindert.

In Futterachsrichtung A sind die Keilstangenaufsätze 5b gegenüber den Keilstangekörpern 5a zwischen einer oberen Arbeitsstellung und einer unteren Backenwechsselstellung beweglich. Hierzu weist jeder Kupplungsaufsatz 5b an seiner Unterseite einen bolzenförmigen Führungsfortsatz 11 auf, der in eine entsprechende Führungsbohrung 17 des Keilstangenkörpers 5a eingreift. Wie in der Zeichnung gut erkennbar ist, wird bei der dargestellten Ausführungsform der Kupplungsaufsatz 5b an dem Keilstangenkörper 5a durch zwei Druckfedern 15 abgestützt, welche in dem Keilstangenkörper 5a angeordnet sind und den Kupplungsaufsatz 5b über entsprechende Druckstücke 16 gegen die Spannbacke 4 in die Arbeitsstellung drücken.

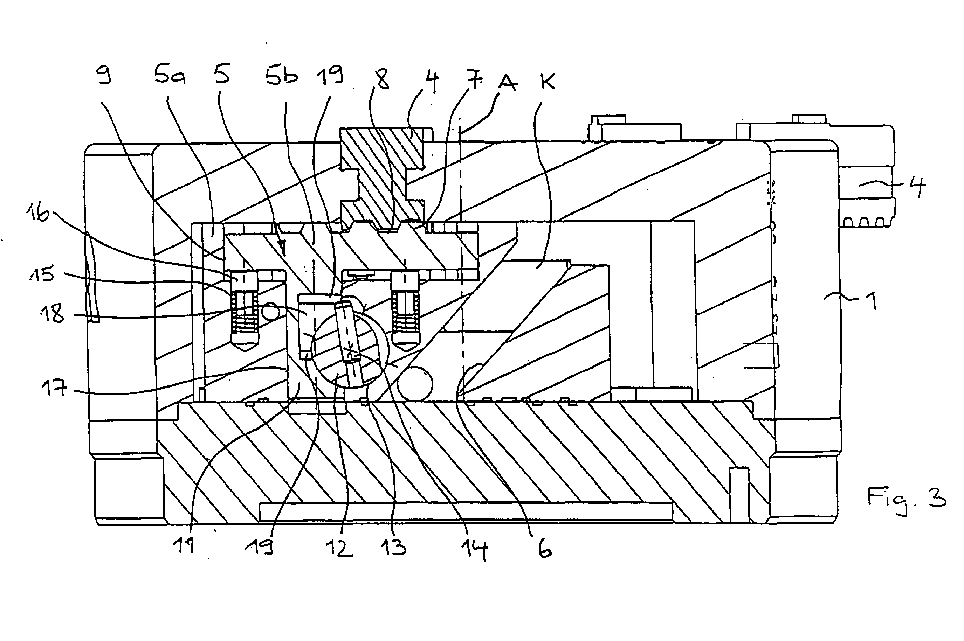

Um den Kupplungsaufsatz 5b aus der in Figur 3 dargestellten Arbeits- oder Kupplungsstellung, in welcher seine Verzahnung 7 mit der Gegenverzahnung 8 der Spannbacke 4 in Eingriff steht, in die untere Backenwechselstellung verschieben zu können, ist ein Stellorgan in der Form eines Exzenterbolzens 12 vorgesehen, der in einer Querbohrung 13 des Keilstangenkörpers 5a drehbar gelagert ist und als Exzenter einen von dem Bolzen 12 radial abstehenden Fortsatz in Form eines Stifts 14 trägt. Dieser Stift 14 greift in eine Ausnehmung 18 des Führungsbolzens 11 des Kupplungsaufsatzes 5b ein und kommt nach einer Drehung des Exzenterbolzens 12 aus der in Figur 3 gezeigten Lage um etwa 80° im entgegengesetzten Uhrzeigersinn in Eingriff mit einer Gegenfläche 19 des Führungsbolzens 11, so daß der Kupplungsaufsatz 5b bei einer weiteren Drehung nach unten gedrückt wird, bis die Verzahnung 7 der Keilstange 5 vollständig aus der Gegenverzahnung 8 der Spannbacke 4 zurückgezogen ist und die Spannbacke 4 in radialer Richtung aus der Backenführung 3 im Futterkörper 1 herausgezogen werden kann.

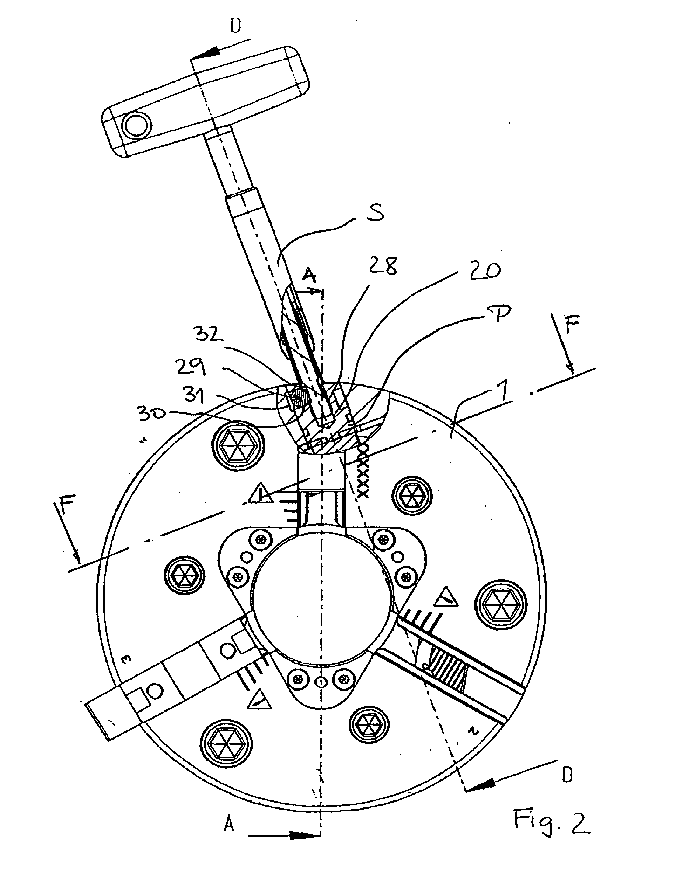

Um den Exzenterbolzen 12 drehen zu können, ist er mit einem Ausklinkbolzen P verbunden, der an seiner außenseitigen Stirnfläche mit einer Schlüsselfläche 20 versehen ist, in die das Kupplungselement des Ausklinkschlüssels S - hier in Form eines Sechskantkopfes 28 - eingesetzt werden kann (siehe Figur 2).

wie bereits zuvor erläutert wurde, wird der Kupplungsaufsatz 5b durch die beiden Druckfedern 15 gegenüber dem Keilstangenkörper 5a abgestützt und nach oben gegen die Spannbacke 4 gedrückt. Dies hat einerseits zur Folge, daß die Federkraft der Druckfedern 15 überwunden werden muß, um den Kupplungsaufsatz 5b durch eine Drehung des Exzenterbolzens 12 vom Eingriff mit der Spannbacke 4 zu lösen, andererseits der Kupplungsaufsatz 5b jedoch durch die Rückstellkraft der Druckfedern 15 auch wieder automatisch unter Drehung des Exzenterbolzens 12 angehoben wird, wenn eine Bedienungsperson das Drehwerkzeug losläßt. Die Anordnung ist dabei so getroffen, daß die Druckfedern 15 den Exzenterbolzen 12 nicht vollständig in die Ausgangslage, sondern nur so weit zurückdrehen, daß zwar eine Überdeckung, aber kein vollständiger Eingriff der Verzahnungen 7, 8 stattfindet. Hierdurch wird sichergestellt, daß die Spannbacke 4 nur dann aus der Backenführung 3 herausgezogen werden kann, so lange die Bedienungsperson das Drehwerkzeug festhält, also der Backenwechsel auf jeden Fall gewünscht ist.

Gemäß der vorliegenden Erfindung ist aus Sicherheitsgründen vorgesehen, daß der Ausklinkschlüssel S zum Betätigen des Exzenterbolzens 12 nur dann von dem Futterkörper 1 abgezogen werden kann, wenn sich der Exzenterbolzen 12 in seiner Ausgangslage (Betriebsstellung) befindet, welche der oberen Arbeitsstellung der Keilstange 5 entspricht.

Hierzu ist eine Arretierungseinrichtung vorgesehen, wie sie an sich bekannt und in Figur 2 dargestellt ist. Diese Arretierungseinrichtung umfaßt eine Kugel 29, die an einer Querbohrung 30 des Ausklinkbolzens P angeordnet ist, wobei sie in ihrer Ausgangsstellung - wie in Figur 2 dargestellt - radial nach außen in eine Ausnehmung 31 des Futterkörpers 1 ausweichen kann, in anderen Drehlagen jedoch durch den Futterkörper 1 an einem solchen Ausweichen gehindert und radial nach innen in die Schlüsselfläche 20 des Ausklinkbolzens P hineingedrückt wird, wo sie mit einer umfangsnut 32 des eingesetzten Ausklinkschlüssels 5 in Eingriff kommt, um diesen an dem Futterkörper 1 zu fixieren.

Zusätzlich sind erfindungsgemäß Arretierungsmittel vorgesehen, die verhindern sollen, daß der Exzenterbolzen 12 in seine Ausgangs- oder Betriebsstellung gebracht werden kann, wenn in die entsprechende Backenführung 3 des Futterkörpers 1 keine Spannbacke 4 in vorgeschriebener Weise eingesetzt ist.

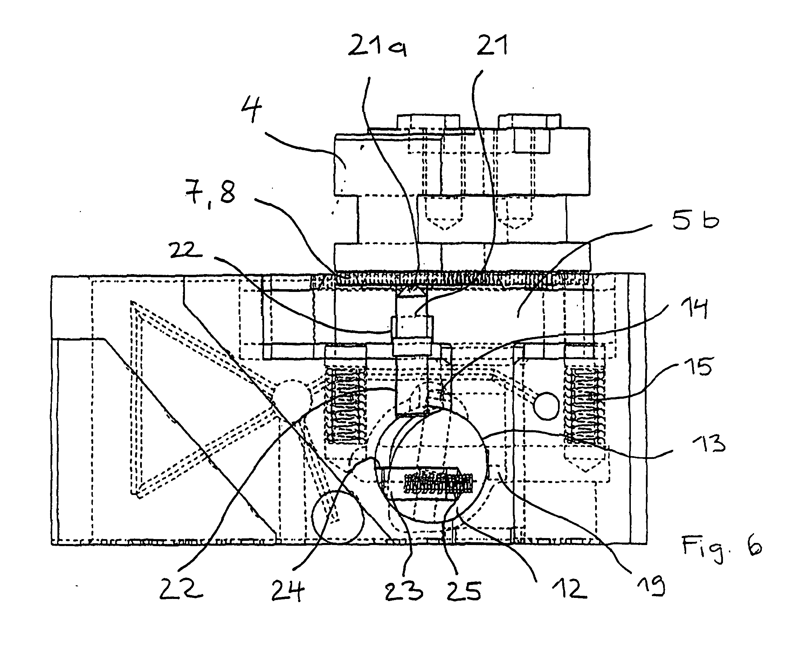

Diese Arretierungsmittel sollen nachfolgend unter Bezugnahme auf die Figuren 6 bis 10 erläutert werden, die eine Keilstange 5 gemäß der vorliegenden Erfindung zeigen. Danach umfassen die Arretierungsmittel zunächst einen Raststift 21, der in einer Durchgangsbohrung 22 verschiebbar gehalten ist, welche sich parallel zur Bewegungsrichtung des Kupplungsaufsatzes 5b von der Verzahnung 7 des Kupplungsaufsatzes 5b ausgehend nach unten durch den Kupplungsaufsatz 5b und den Keilstangenkörper 5a bis hin zu der Querbohrung 13, in welcher der Exzenterbolzen 12 angeordnet ist, erstreckt. Der Raststift 21 kann dabei aus der Durchgangsbohrung 22 nach oben in den Bereich der Verzahnungen 7 austreten, wobei eine obere Endlage durch entsprechende axiale Anschlagflächen an dem Raststift 14 und der Durchgangsbohrung 22 definiert wird. Der Durchmesser des Druckelements 23 und der Durchgangsbohrung 22 sind entsprechend aufeinander abgestimmt. Weiterhin gehört zu den Arretierungsmitteln ein Druckelement 23, das in einer Bohrung 24 des Exzenterbolzens 12 verschiebbar angeordnet ist und durch ein in der Bohrung 24 abgestütztes Druckfederelement 25 nach außen gedrückt wird.

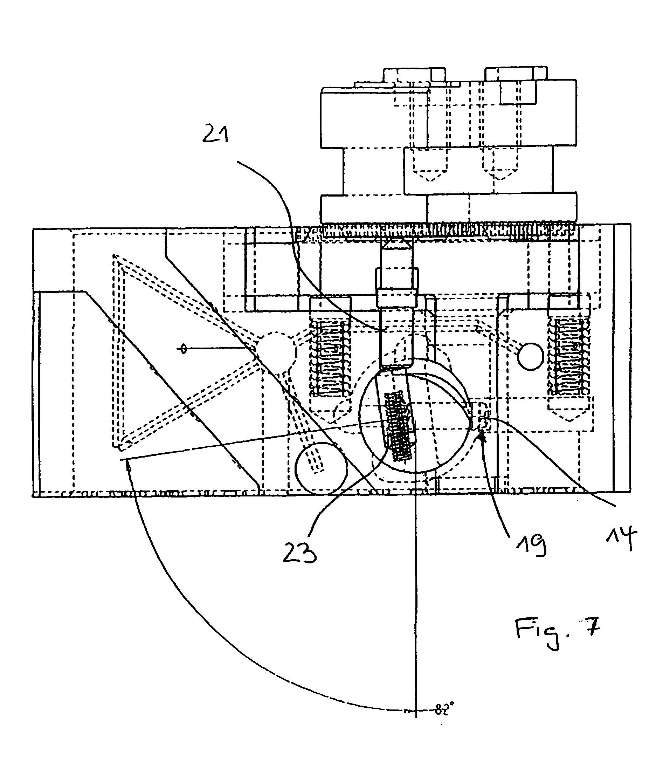

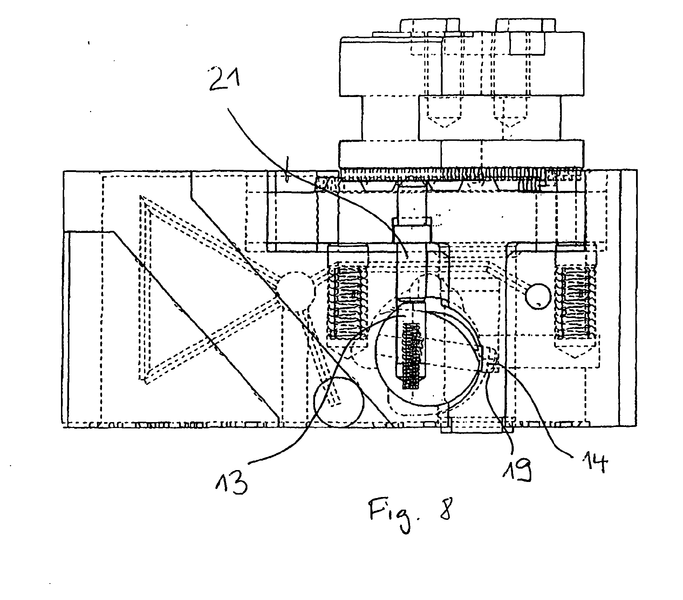

Die Positionierung der Bohrung 24 in dem Exzenterbolzen 12 und der Durchgangsbohrung 22 für den Raststift 14 sind dabei so aufeinander abgestimmt, daß die Bohrungen 22, 24 in einer vorgegebenen Drehlage des Exenterbolzens 12 - bei der dargestellten Ausführungsform in der in der Figur 8 dargestellte Stellung, in welcher der Exenterbolzen 12 im Uhrzeigersinn um 90° gegenüber der in Figur 7 dargestellten Ausgangslage verdreht ist einander gegenüber liegen und koaxial zueinander ausgerichtet sind und das Druckelement 23 durch die Federkraft des Druckfederelements 25 in die Durchgangsbohrung 22 hineineingedrückt werden kann.

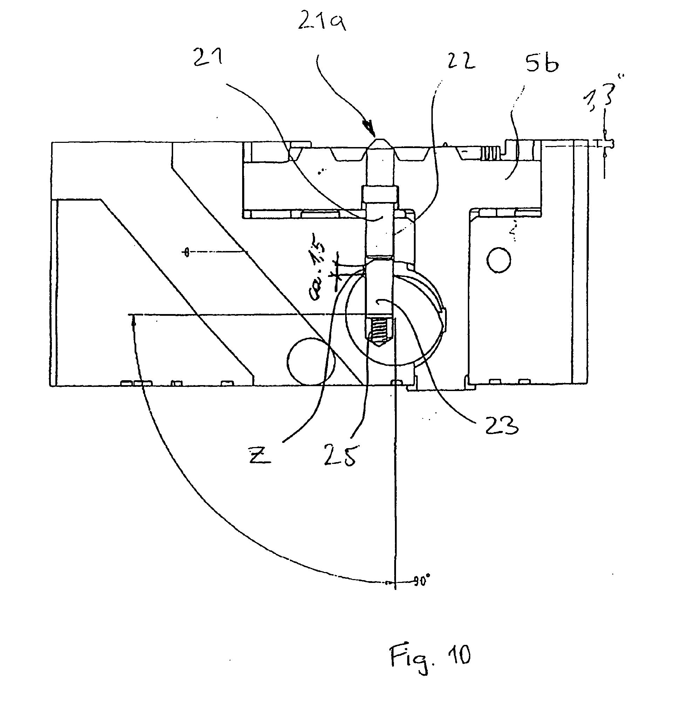

Wie ein Vergleich der Figuren 8 und 10 deutlich macht, ist ein Eintritt des Druckelements 23 in die Durchgangsbohrung 22 nur möglich, wenn der Raststift 21 nach oben hin aus dem Kupplungsaufsatz 5b heraustreten kann. Dies ist nur dann der Fall, wenn die Öffnung der Durchgangsbohrung 22 im Bereich der Verzahnung 7 frei liegt, wie dies in Figur 10 gezeigt ist, und nicht durch eine Spannbacke 4 verschlossen wird, wie dies in Figur 10 gezeigt ist. Mit anderen Worten kann das Druckelement 23 nicht in die Durchgangsbohrung 22 eintreten, wenn eine Spannbacke vorschriftsmäßig in die entsprechende Backenführung 3 eingeschoben ist. Ein Eintritt ist indes nur möglich, wenn eine solche Spannbacke 4 nicht eingesetzt ist bzw. nicht soweit eingesetzt ist, daß sie die Durchgangsbohrung 22 überdeckt, d.h. ein wenn fehlerhafter Betriebszustand vorliegt. In diesem Fall wird durch den Eingriff des Druckelements 23 in die Durchgangsbohrung 22 verhindert, daß der Exzenterbolzen 12 in seine Ausgangslage zurückgedreht werden kann. Konkret kommt es an der in Figur 10 gezeigten Stelle Z zur Anlage des Druckelements 23 an der Wandung der Durchgangsbohrung 22.

Nachfolgend soll der Auswechselvorgang einer Spannbacke 4 anhand der Figuren 6 bis 10 erläutert werden.

Die Figur 6 zeigt die Ausgangs- oder Betriebsstellung, in welcher sich der Kupplungsaufsatz 5b der Keilstange 5 in seiner oberen Arbeitsstellung befindet und mit einer Spannbacke 4, die in die entsprechende Backenführung 3 des Spannfutters 1 eingesetzt ist, in Eingriff steht.

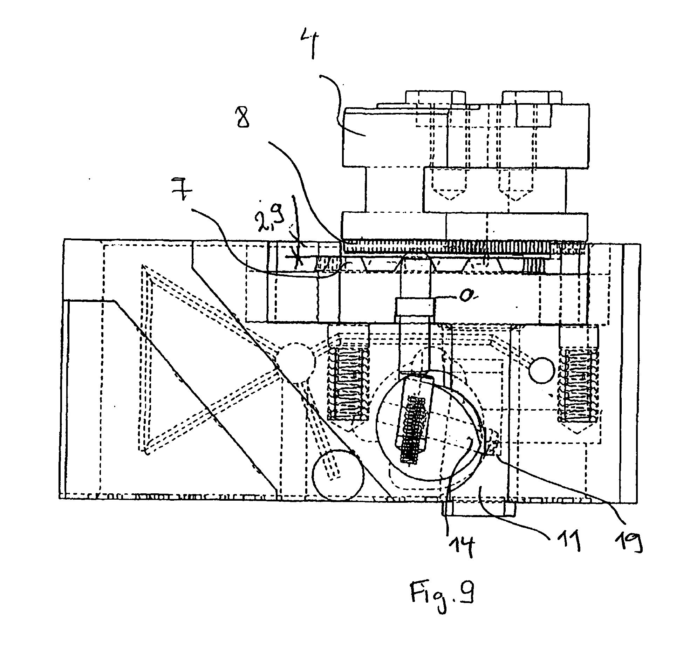

Zum Auswechseln der Spannbacke 4 wird der Exzenterbolzen 12 aus der in Figur 6 dargestellten Ausgangslage mittels eines Ausklinkschlüssels S um etwa 97° in die in Figur 9 dargestellten Endlage gedreht. Dabei findet nach einem Drehwinkel von etwa 80° - wie bereits beschrieben - in erster Kontakt zwischen dem Stift 14 mit der entsprechenden Gegenfläche 19 des Führungsbolzen 11 in der Weise statt, daß der Kupplungsaufsatz 5 bei einer weiteren Drehung nach unten gedrückt wird, bis die Verzahnung 7 der Keilstangen 5 vollständig aus der Gegenverzahnung 8 der Spannbacke 4 zurückgezogen ist.

Bei dieser Drehung kommt bei einem Drehwinkel von etwa 82° das Druckelement 23 mit dem Raststift 21 in Kontakt, wie dies in Figur 7 angedeutet ist. Bei einer weiteren Drehung in die in der Figur 8 gezeigte Lage (90°) wird der Raststift 21 durch die Kraft des Druckfederelements 25 nach oben gedrückt, wobei jedoch die Spannbacke 4 verhindert, daß der Raststift 21 nach oben aus dem Kupplungsaufsatz 5b austreten kann. Wenn der Exzenterbolzen 12 in die Figur 9 dargestellte Endstellung weitergedreht wird, bewegt sich der Kupplungsaufsatz 5b relativ zu dem keilstangenkörper 5a weiter nach unten, bis die Verzahnungen 7, 8 sich getrennt haben. In dieser Endlage kann die Spannbacke 4 aus der entsprechenden Backenführung 3 im Futterkörper 1 herausgezogen und eine neue eingesetzt werden. Sofern eine neue Spannbacke 4 eingesetzt wird, kann der Exzenterbolzen 12 in umgekehrter Weise wie zuvor beschrieben in seine Ausgangslage zurückgedreht werden.

Sofern, wie in Figur 10 dargestellt ist, keine Spannbacke 4 eingesetzt wird, kann der Exzenterbolzen 12 nur bis in die in Figur 10 dargestellte Lage zurückgedreht werden, in welcher sich das Druckelement 23 und die Durchgangsbohrung 22 gegenüberliegen. In dieser Stellung wird das Druckelement 23 durch die Rückstellkraft des Druckfederelements 25 nach oben in die Durchgangsbohrung 22 gedrückt, wobei der Raststift 21 nach oben aus dem Kupplungsaufsatz 5b herausgedrückt wird. In dieser Stellung wird durch den Eingriff zwischen dem Druckelement 23 und der Durchgangsbohrung 22 an der Stelle Z ein weiteres Zurückdrehen des Exzenterbolzens 23 verhindert.

## Patentansprüche

1. Kraftspannfutter für Werkzeugmaschinen, insbesondere für Drehmaschinen, mit einem Futterkörper (1) und mehreren Spannbacken (4), die in radialen Backenführungen (3) des Futterkörpers (1) bewegbar angeordnet und durch einen Antrieb radial zur Futterachse (A) gemeinsam verstellbar sind, wobei zu dem Antrieb Keilstangen (5) gehören, die zur Verstellung der Spannbacken (4) im Futterkörper (1) quer zur Futterachse (A) verschiebbar geführt sind und jeweils eine Verzahnung (7) aufweisen, die mit einer entsprechenden Gegenverzahnung (8) an einer zugehörigen Spannbacke (4) in Eingriff steht, wobei die Keilstangen (5) jeweils einen Keilstangenkörper (5a) und einen darin gehaltenen Kupplungsaufsatz wobei (5b), an welchem die Verzahnung (7) vorgesehen ist, aufweisen und wobei ein Stellmechanismus vorgesehen ist, der einen im Futterkörper (1) drehbar gelagerten Ausklinkbolzen (P) und einen mit dem Ausklinkbolzen (P) kuppelbaren Ausklinkschlüssel (S) aufweist, um durch eine Drehung des Ausklinkbolzens (P) den die Verzahnung (7) aufweisenden Kupplungsaufsatz (5b) der Keilstange (5) parallel zur Futterachse (A) zwischen einer oberen Arbeitsstellung und einer unteren Backenwechselstellung, in der die Verzahnung (7) der Keilstange (5) aus der Gegenverzahnung (8) der Spannbacke (4) zurückgezogen ist und diese radial aus dem Futterkörper entnommen werden kann, zu verstellen, wobei ein mit dem Ausklinkbolzen (P) gekuppelter Exzenterbolzen (12) in einer Querbohrung (13) des Keilstangenkörpers (5a) drehbar gelagert ist und einen radial abragenden Fortsatz (14) trägt, der bei einer Drehung des Exenterbolzens (12) mit einer entsprechenden Gegenfläche (19) des Kupplungsaufsatzes (5b), in Eingriff kommt, um den Kupplungsaufsatz (5b) zwischen der oberen Arbeitsstellung und der unteren Backenwechselstellung zu verstellen und wobei die Keilstange (5) Arretierungsmittel (22, 23) aufweist, welche ein Verdrehen des Ausklinkbolzens (P) aus der der unteren Backenwechselstellung der Keilstange (5) entsprechenden Drehlage in die der oberen Arbeitsstellung der Keilstange (5) entsprechenden Drehlage erlauben, wenn sich die Verzahnung (7) des Kupplungsaufsatzes (5b) mit der Gegenverzahnung (8) einer zugehörigen Spannbacke (4) in Eingriff befindet, und die anderenfalls in Eingriff kommen und so ein Verdrehen des Ausklinkbolzens (P) in die der oberen Arbeitsstellung entsprechenden Drehlage verhindern, **dadurch gekennzeichnet, daß** eine Arretierungseinrichtung vorgesehen ist, die den Ausklinkschlüssel (S) an dem Ausklinkbolzen (P) arretiert und ein Lösen des Ausklinkschlüssels (S) nur in der Arbeitsstellung der Keilstange (5) zuläßt, und daß zu den Arretierungsmitteln ein Raststift (21) gehört, der in einer Durchgangsbohrung (22) verschiebbar gehalten ist, welche sich parallel zur Bewegungsrichtung des Kupplungsaufsatzes (5b) von der Verzahnung (7) des Kupplungsaufsatzes (5b) ausgehend durch den Kupplungsaufsatz (5b) und den Keilstangenkörper (5a) bis hin zu der Querbohrung (13), in welcher der Exzenterbolzen (12) angeordnet ist, erstreckt, und die Arretierungsmittel weiterhin ein Druckelement (23) aufweisen, das in einer Bohrung (24) des Exzenterbolzens (12) verschiebbar angeordnet ist und durch ein in der Bohrung (24) abgestütztes Druckfederelement (25) nach außen gedrückt wird, wobei die Bohrung (24) des Exzenterbolzens (12) und die Durchgangsbohrung (22), in welcher der Raststift (21) gehalten ist, einander in einer vorgegebenen Drehlage des Exzenterbolzens (12), gegenüberliegen, so daß das Druckelement (23) durch die Vorspannkraft des Druckfederelements (25) in die Durchgangsbohrung (22) hineingedrückt wird und dabei den Raststift (21) aus dem Kupplungsaufsatz (5b) herausdrückt, wobei dann ein Zurückdrehen des Exzenterbolzens (12) in die Ausgangsstellung und damit eine Rückführung des Kupplungsaufsatzes (5b) in seine Arbeitsstellung durch den Eingriff des Druckelements (23) in die Durchgangsbohrung (22) verhindert wird, und wobei der Raststift (21) durch die Gegenverzahnung (8) einer an der Keilstange (5) angebrachten und die Durchgangsbohrung (22) verschließenden Spannbacke (4) daran gehindert wird, aus der Keilstange (5) auszutreten, so daß das Druckelement (23) außerhalb der Durchgangsbohrung (22) verbleibt und der Exzenterbolzen (12) in seine Ausgangslage zurückgedreht werden kann.

2. Kraftspannfutter nach Anspruch 1, **dadurch gekennzeichnet, daß** das Druckelement (23) im Bereich seiner mit dem Raststift (21) in Kontakt kommenden Stirnfläche (23a) abgeschrägt oder abgerundet ausgebildet ist.

3. Kraftspannfutter nach einem der vorherigen Ansprüche, **dadurch gekennzeichnet, daß** der Kupplungsaufsatz (5b) an seiner Unterseite einen Führungsfortsatz (11) besitzt, der in eine entsprechende Führungsbohrung (17) des Keilstangenkörpers (5a) eingreift.

4. Kraftspannfutter nach Anspruch 3, **dadurch gekennzeichnet, daß** der Kupplungsaufsatz (5b) an dem Keilstangenkörper (5a) durch Druckfedern (15) gegebenenfalls über Druckstücke (16) abgestützt ist und gegen die Spannbacke (4) gedrückt wird.

5. Keilstange mit einem Keilstangenkörper (5a) und einem daran gehaltenen Kupplungsaufsatz (5b), an dessen Oberseite eine Verzahnung (7) vorgesehen ist, wobei ein Exzenterbolzen (12) in einer Querbohrung (13) des Keilstangenkörpers (5a) drehbar gelagert ist und einen radial abragenden Fortsatz (14) trägt, der bei einer Drehung des Exzenterbolzens (12) mit einer entsprechenden Gegenfläche (19) des Kupplungsaufsatzes (5b) in Eingriff kommt, um diesen zwischen einer oberen Arbeitsstellung und einer unteren Backenwechselsstellung zu bewegen, wobei die Keilstange (5) Arretierungsmittel aufweist, welche ein Verdrehen des Ausklinkbolzens (P) aus der der unteren Backenwechselstellung der Keilstange (5) entsprechenden Drehlage in die der oberen Arbeitsstellung der Keilstange (5) entsprechenden Drehlage erlauben, wenn sich die Verzahnung (7) des Kupplungsaufsatzes (5b) mit der Gegenverzahnung (8) einer zugehörigen Spannbacke (4) in Eingriff befindet, und die anderenfalls ein Verdrehen des Ausklinkbolzens (P) in die der oberen Arbeitsstellung entsprechenden Drehlage verhindern, **dadurch gekennzeichnet, daß** zu den Arretierungsmitteln ein Raststift (21) gehört, der in einer Durchgangsbohrung (22) verschiebbar gehalten ist, welche sich parallel zur Bewegungsrichtung des Kupplungsaufsatzes (5b) von der Verzahnung (7) des Kupplungsaufsatzes (5b) ausgehend durch den Kupplungsaufsatz (5b) und den Keilstangenkörper (5a) bis hin zu der Querbohrung (13), in welcher der Exzenterbolzen (12) angeordnet ist, erstreckt, und die Arretierungsmittel weiterhin ein Druckelement (23) aufweisen, das in einer Bohrung (24) des Exzenterbolzens (12) verschiebbar angeordnet ist und durch ein in der Bohrung (24) abgestütztes Druckfederelement (25) nach außen gedrückt wird, wobei die Bohrung (24) des Exzenterbolzens (12) und die Durchgangsbohrung (22), in welcher der Raststift (21) gehalten ist, einander in einer vorgesehenen Drehlage des Exzenterbolzens (12), gegenüberliegen, so daß das Druckelement (23) durch die Vorspannkraft des Druckfederelements (25) in die Durchgangsbohrung (22) hineingedrückt wird und dabei den Raststift (21) aus dem Kupplungsaufsatz (5b) herausdrückt, wobei dann ein Zurückdrehen des Exzenterbolzens (12) in die Ausgangsstellung und damit eine Rückführung des Kupplungsaufsatzes (5b) in seine Arbeitsstellung durch den Eingriff des Druckelements (23) in die Durchgangsbohrung (22) verhindert wird, und wobei der Raststift (21) durch die Gegenverzahnung (8) einer an der Keilstange (5) angebrachten und die Durchgangsbohrung (22) verschließenden Spannbacke (4) daran gehindert wird, aus der Keilstange (5) auszutreten, so daß das Druckelement (23) außerhalb der Durchgangsbohrung (22) verbleibt und der Exzenterbolzen (12) in seine Ausgangslage zurückgedreht werden kann.

6. Keilstange nach Anspruch 5, **dadurch gekennzeichnet, daß** das Druckelement (23) im Bereich seiner mit dem Raststift (21) in Kontakt kommenden Stirnfläche (23a) abgeschrägt oder abgerundet ausgebildet ist.

7. Keilstange nach Anspruch 5 oder 6, **dadurch gekennzeichnet, daß** der Kupplungsaufsatz (5b) an seiner Unterseite einen Führungsfortsatz (11) besitzt, der in eine entsprechende Führungsbohrung (17) des Keilstangenkörpers (5a) eingreift.

8. Keilstange nach Anspruch 9, **dadurch gekennzeichnet, daß** der Kupplungsaufsatz (5b) an dem Keilstangenkörper (5a) durch Druckfedern (15) gegebenenfalls über Druckstücke (16) abgestützt ist und gegen die Spannbacke (4) gedrückt wird.

## Claims

1. A powered clamping chuck for machine tools, in particular for lathes, having a chuck body (1) and several clamping jaws (4) that are arranged movably in radial jaw guides (3) of the chuck body (1) and are displaceable together, by means of a drive, radially with respect to the chuck axis (A), the drive including key bars (5) that are slidably guided transversely to the chuck axis (A) for displacement of the clamping jaws (4) in the chuck body (1) and each comprise a tooth set (7) that is in engagement with a corresponding counter-tooth set (8) on an associated clamping jaw (4), wherein the key bars (5) each have a key bar body (5a) and, held thereon, a coupling attachment (5b) on which the tooth set (7) is provided, and wherein a positioning mechanism is provided that comprises a releasing bolt (P) mounted rotatably in the chuck body (1) and a releasing key (S) that can be coupled to the releasing bolt (P) in order to displace, by way of a rotation of the releasing bolt (P), the coupling attachment (5b), comprising the tooth set (7), of the key bar (5) parallel to the chuck axis (A) between an upper working position and a lower jaw changing position in which the tooth set (7) of the key bar (5) is pulled back out of the counter-tooth set (8) of the clamping jaw (4) and the latter can be removed radially from the chuck body; an eccentric bolt (12) coupled to the releasing bolt (P) being rotatably mounted in a transverse bore (13) of the key bar body (5a) and carrying a radially projecting extension (14) that, upon a rotation of the eccentric bolt (12), comes into engagement with a corresponding countersurface (19) of the coupling attachment (5b) in order to displace the coupling attachment (5b) between the upper working position and the lower jaw changing position, and wherein the key bar (5) has locking means that allow a rotation of the releasing bolt (P) out of the rotational position corresponding to the lower jaw changing position of the key bar (5), into the rotational position corresponding to the upper working position of the key bar (5), if the tooth set (7) of the coupling attachment (5b) is in engagement with the counter-tooth set (8) of an associated clamping jaw (4), and that otherwise prevent rotation of the releasing bolt (P) into the rotational position corresponding to the upper working position, **characterized in that** a locking device is provided which locks the releasing key (S) on the releasing bolt (P) and permits disengagement of the releasing key (5) only in the working position of the key bar (5), and that the locking means include a snap-lock pin (21) that is held slidably in a passthrough bore (22) which extends, parallel to the direction of motion of the coupling attachment (5b), from the tooth set (7) of the coupling attachment (5b) through the coupling attachment (5b) and the key bar body (5a) to the transverse bore (13) in which the eccentric bolt (12) is arranged and the locking means furthermore comprise a pusher element (23) that is arranged slidably in a bore (24) of the eccentric bolt (12) and is pushed outward by a compression spring element (25) braced in the bore (24); the bore (24) of the eccentric bolt (12) and the passthrough bore (22) in which the snap-lock pin (21) is held being located opposite one another in a predefined rotational position of the eccentric bolt (12), so that the pusher element (23) is pushed by the preload force of the compression spring element (25) into the passthrough bore (22) and pushes the snap-lock pin (21) out of the coupling attachment (5b); a rotation of the eccentric bolt (12) back into the starting position, and thus a return of the coupling attachment (5b) to its working position, then being prevented by the engagement of the pusher element (23) into the passthrough bore (22); and the snap-lock pin (21) being prevented from emerging from the key bar (5) by the counter-tooth set (8) of a clamping jaw (4) that is mounted on the key bar (5) and closes off the passthrough bore (22), so that the pusher element (23) remains outside the passthrough bore (22) and the eccentric bolt (12) can be rotated back into its starting position.

2. The powered clamping chuck as defined in claim 1, wherein the pusher element (23) is of beveled or rounded configuration in the region of its end surface (23a) that comes into contact with the snap-lock pin (21).

3. The powered clamping chuck as defined in any of the foregoing claims, wherein the coupling attachment (5b) possesses on its underside a guide extension (11) that engages into a corresponding guide bore (17) of the key bare body (5a).

4. The powered clamping chuck as defined in claim 3, wherein the coupling attachment (5b) is braced against the key bare body (5a) by way of compression springs (15), optionally via pusher pieces (16), and is pushed toward the clamping jaw (4).

5. A key bar having a key bar body (5a) and, held thereon, a coupling attachment (5b) on whose upper side a tooth set (7) is provided, an eccentric bolt (12) being rotatbly mounted in a transverse bore (13) of the key bar body (5a) and carrying a radially projecting extension (14) that, upon a rotation of the eccentric bolt (12), comes into engagement with a corresponding countersurface (19) of the coupling attachment (5b) in order to displace the latter between an upper working position and a lower jaw changing position, wherein the key bar (5) has locking means that allow a rotation of the releasing bolt (P) out of the rotational position corresponding to the lower jaw changing position of the key bar (5), into the rotational position corresponding to the upper working position of the key bar (5), if the tooth set (7) of the coupling attachment (5b) is in engagement with the counter-tooth set (8) of an associated clamping jaw (4), and that otherwise prevent rotation of the releasing bolt (P) into the rotational position corresponding to the upper working position, **characterized in that** the lacking means include a snap-lock pin (21) that is held slidably in a passthrough bore (22) which extends, parallel to the direction of motion of the coupling attachment (5b), from the tooth set (7) of the coupling attachment (5b) through the coupling attachment (5b) and the key bar body (5a) to the transverse bore (13) in which the eccentric bolt (12) is arranged; and the locking means furthermore comprise a pusher element (23) that is arranged slidably in a bore (24) of the eccentric bolt (12) and is pushed outward by a compression spring element (25) braced in the bore (24); the bore (24) of the eccentric bolt (12) and the passthrough bore (22) in which the snap-lock pin (21) is held being located opposite one another in a stipulated rotational position of the eccentric bolt (12), so that the pusher element (23) is pushed by the preload force of the compression spring element (25) into the passthrough bore (22) and pushes the snap-lock pin (21) out of the coupling attachment (5b); a rotation of the eccentric bolt (12) back into the starting position, and thus a return of the coupling attachment (5b) to its working position, then being prevented by the engagement of the pusher element (23) into the passthrough bore (22); and the snap-lock pin (21) being prevented from emerging from the key bar (5) by the counter-tooth set (8) of a clamping jaw (4) that is mounted on the key bar (5) and closes off the passthrough bore (22), so that the pusher element (23) remains outside the passthrough bore (22) and the eccentric bolt (12) can be rotated back into its starting position.

6. The key bar as defined in claim 5, wherein the pusher element (23) is of beveled or rounded configuration in the region of its end surface (23a) that comes into contact with the snap-lock pin (21).

7. The key bar as defined in any of claims 5 or 6, wherein the coupling attachment (5b) possesses on its underside a guide extension (11) that engages into a corresponding guide bore (17) of the key bar body (5a).

8. The key bar as defined in claim 7, wherein the coupling attachment (5b) is braced against the key bar body (5a) by way of compression springs (15), optionally via pusher pieces (16), and is pushed toward the clamping jaw (4).

## Revendications

1. Mandrin de serrage pour les machines-outils, en particulier les tours, avec un corps de mandrin (1) et plusieurs mors de serrage (4) qui peuvent être déplacés dans les rainures de guidage radiales (3) du corps du mandrin (1) et peuvent être ajustés conjointement à l'aide d'une pulsion radiale à l'axe du mandrin (A) effectuée par des crémaillères, qui servent à l'ajustement des mors de serrage, insérée de façon coulissante dans le corps de mandrin en diagonale par rapport à l'axe de mandrin (A) et qui sont pourvues d'une denture (7) qui s'engage dans la contre-denture (7) d'un mors de serrage correspondant, les crémaillères (5) étant dotées chacune d'un corps de crémaillère (5a) contenant un accessoire d'embrayage (5b) sur lequel une denture a été pratiquée, et un mécanisme de positionnement doté d'un goujon d'assemblage (P) rotatif à l'intérieur du corps de mandrin (1) et d'une clé mâle pouvant (S) être couplée avec le goujon d'assemblage (P) afin, au moyen d'une rotation du goujon d'assemblage (P), de déplacer l'accessoire d'embrayage (5b) de la crémaillère (5), doté d'une denture, parallèlement à l'axe du mandrin (A) entre une position de travail supérieure et une position inférieure de changement de mors, dans laquelle la denture (7) de la crémaillère (5) est désengagée de la contre-denture (8) du mors de serrage (4) et peut être radialement retirée du corps de mandrin, un boulon excentrique (12) couplé avec le goujon de serrage (P) pouvant être pivoté dans une percée transversale (13) du corps de crémaillère (5a) et présentant une protubérance (14) radiale qui, lors d'une rotation du boulon excentrique (12), entre en contact avec une surface appropriée (19) de l'accessoire d'embrayage (5b) afin de déplacer l'accessoire d'embrayage (5b) entre la position de travail supérieure et la position inférieure de changement de mors, et doté d'un mécanisme de verrouillage qui maintien la clé mâle (5) en place sur le goujon d'assemblage (P) pour ne permettre un déblocage du goujon d'assemblage (P) que dans la position de travail de la crémaillère (5), **caractérisé en ce que** la crémaillère (5) est doté de dispositifs de verrouillage (22, 23), lesquels permettent la torsion du goujon d'assemblage (P) à partir de la position rotationnelle correspondante de la position inférieure de changement de mors de la crémaillère (5) vers la position rotationnelle correspondante de la position supérieure de travail de la crémaillère (5), si la denture (7) de l'accessoire d'embrayage (5b) s'engage dans la contre-denture (8) d'un mors de serrage correspondant (4), et s'ils entre autrement en contact et empêchent ainsi la torsion du goujon d'assemblage (P) vers la position rotationnelle correspondante de la position supérieure de travail, et que les dispositifs de verrouillage sont dotés d'une broche d'arrêt (21) qui peut être coulissée dans un trou débouchant (22), lequel s'étend parallèlement à la direction de mouvement de l'accessoire d'embrayage (5b) à partir de la denture (7) de l'accessoire d'embrayage (5b), à travers l'accessoire d'embrayage (5b) et le corps de crémaillère (5a) et jusqu'à la percée transversale (13), dans laquelle un boulon excentrique (12) a été placé, et les dispositifs de verrouillage étant de plus dotés d'un élément de pression (23) qui peut être coulissé à l'intérieur d'une percée (24) du boulon excentrique (12) et est poussé vers l'extérieur par un élément de ressort à pression (25) étayé contenu dans la percée (24), la percée (24) du boulon excentrique (12) et le trou débouchant (22), dans lequel la broche d'arrêt (21) est contenue, se trouvant face à face l'un à l'autre dans une position rotationnelle déterminée du boulon excentrique (12), de façon à ce que l'élément de pression (23) soit poussé vers l'intérieur du trou débouchant (22) par la force d'accouplement de l'élément de ressort à pression (25) et pousse ainsi la broche d'arrêt (21) vers l'extérieur de l'accessoire d'embrayage (5b), empêchant un retour du boulon excentrique (12) en position de sortie, ainsi qu'un retour de l'accessoire d'embrayage (5b) en position de travail grâce à l'engagement de l'élément de pression (23) dans le trou débouchant (22), la broche d'arrêt (21) étant empêchée de sortir de la crémaillère (5) par la contre-denture d'un mors de serrage (4) pratiqué sur la crémaillère (5) et qui bloque le trou débouchant (22), de façon à ce que l'élément de pression (23) demeure en dehors du trou débouchant et que le boulon excentrique (12) puisse être retournée dans sa position de sortie.

2. Mandrin de serrage selon la revendication 1, **caractérisé en ce que** l'élément de pression (23) a une forme arrondie ou taillée en biseau dans la zone de sa surface frontale (23a) qui entre en contact avec la broche d'arrêt (21).

3. Mandrin de serrage selon l'une des revendications précédentes, **caractérisé en ce que** la partie inférieure de l'accessoire d'embrayage (5b) possède une extension de guidage (11) qui entre dans une percée de guidage (17) appropriée du corps de crémaillère (5a).

4. Mandrin de serrage selon la revendication 3, **caractérisé en ce que** l'accessoire d'embrayage (5b) sur le corps de crémaillère (5a) est, à l'aide d'un ressort à pression (15), soutenu par un élément de pression (16) et pressé contre le mors de serrage (4).

5. Crémaillère avec un corps de crémaillère (5a) comprenant un accessoire d'embrayage (5b), dont la partie supérieure est dotée d'une denture (7), un boulon excentrique (12) pouvant être pivoté dans une percée transversale (13) du corps de crémaillère (5a) et présentant une protubérance (14) radiale qui, lors d'une rotation du boulon excentrique (12), entre en contact avec une surface appropriée (19) de l'accessoire d'embrayage (5b) afin de le déplacer entre la position de travail supérieure et la position inférieure de changement de mors, **caractérisé en ce que** la crémaillère (5) est dotée de dispositifs de verrouillage (22, 23), lesquels permettent la torsion du goujon d'assemblage (P) à partir de la position rotationnelle correspondante de la position inférieure de changement de mors de la crémaillère (5) vers la position rotationnelle correspondante de la position supérieure de travail de la crémaillère (5), si la denture (7) de l'accessoire d'embrayage (5b) s'engage dans la contre-denture (8) d'un mors de serrage correspondant (4), et s'ils entre autrement en contact et empêchent ainsi la torsion du goujon d'assemblage (P) vers la position rotationnelle correspondante de la position supérieure de travail, et que les dispositifs de verrouillage sont dotés d'une broche d'arrêt (21) qui peut être coulissée dans un trou débouchant (22), lequel s'étend parallèlement à la direction de mouvement de l'accessoire d'embrayage (5b) à partir de la denture (7) de l'accessoire d'embrayage (5b), à travers l'accessoire d'embrayage (5b) et le corps de crémaillère (5a) et jusqu'à la percée transversale (13), dans laquelle un boulon excentrique (12) a été placé, et les dispositifs de verrouillage étant de plus dotés d'un élément de pression (23) qui peut être coulissé à l'intérieur d'une percée (24) du boulon excentrique (12) et est poussé vers l'extérieur par un élément de ressort à pression (25), la percée (24) du boulon excentrique (12) et le trou débouchant (22), dans lequel la broche d'arrêt (21) est contenue, se trouvant face à face l'un à l'autre dans une position rotationnelle déterminée du boulon excentrique (12), de façon à ce que l'élément de pression (23) soit poussé vers l'intérieur du trou débouchant (22) par la force d'accouplement de l'élément de ressort à pression (25) et pousse ainsi la broche d'arrêt (21) vers l'extérieur de l'accessoire d'embrayage (5b), empêchant un retour du boulon excentrique (12) en position de sortie, ainsi qu'un retour de l'accessoire d'embrayage (5b) en position de travail grâce à l'engagement de l'élément de pression (23) dans le trou débouchant (22), la broche d'arrêt (21) étant empêchée de sortir de la crémaillère (5) par la contre-denture d'un mors de serrage (4) pratiqué sur la crémaillère (5) et qui bloque le trou débouchant (22), de façon à ce que l'élément de pression (23) demeure en dehors du trou débouchant et que le boulon excentrique (12) puisse être retournée dans sa position de sortie.

6. Crémaillère selon la revendication 5, **caractérisées en ce que** l'élément de pression (23) a une forme arrondie ou taillée en biseau dans la zone de sa surface frontale (23a) qui entre en contact avec la broche d'arrêt (21).

7. Crémaillère selon les revendications 5 ou 6, **caractérisée en ce que** la partie inférieure de l'accessoire d'embrayage (5b) est dotée d'une extension de guidage (11) qui entre dans une percée de guidage (17) appropriée du corps de crémaillère (5a).

8. Crémaillère selon la revendication 7, **caractérisée en ce que** l'accessoire d'embrayage (5b) sur le corps de crémaillère (5a) est, à l'aide d'un ressort à pression (15), soutenu par un élément de pression (16) et pressé contre le mors de serrage (4).
